(19) Europäisches Patentamt
European Patent Office
Office européen des brevets

(11) **EP 2 094 023 A1**

(12) **EUROPEAN PATENT APPLICATION**
published in accordance with Art. 153(4) EPC

(43) Date of publication:
26.08.2009 Bulletin 2009/35

(51) Int Cl.:
*H04Q 7/22* (0000.00)

(21) Application number: **08715219.5**

(22) Date of filing: **12.03.2008**

(86) International application number:
**PCT/CN2008/070483**

(87) International publication number:
**WO 2008/113290 (25.09.2008 Gazette 2008/39)**

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **16.03.2007 CN 200710087413**

(71) Applicants:
• **Huawei Technologies Co., Ltd.**
**Longgang District, Shenzhen**
**Guangdong 518129 (CN)**
• **University Of Electronic Science**
**And Technology Of China**
**Chengdu**
**Sichuan 610054 (CN)**

(72) Inventors:
• **SHANG, Mingsheng**
**Chengdu**
**Sichuan 610054 (CN)**
• **FU, Yan**
**Chengdu**
**Sichuan 610054 (CN)**
• **SHAO, Gang**
**Guangdong 518129 (CN)**

(74) Representative: **Barth, Stephan Manuel**
**Reinhard, Skuhra, Weise & Partner GbR**
**Patent- und Rechtsanwälte**
**Friedrichstrasse 31**
**80801 München (DE)**

(54) **METHOD AND DEVICE FOR PUSHING INFORMATION**

(57)     A method for pushing messages includes: categorizing a first information according to a first category set, creating a first mapping relation between the first information and a category in the first category set; categorizing a second information sent by a message source according to a second category set, and creating a second mapping relation between the message source that sends the second information and a category in the second category set; sorting out each category in the second category set that matches the corresponding category in the first category set which is in the first mapping relation with the first information according to the relation between the category in the first category set and the category in the second category set, and determining the corresponding message source according to the second mapping relation; and pushing the first information to the determined corresponding message source. With the present invention, the communication terminals for receiving the first information (namely, advertisement) to be pushed are determined according to the short message (namely, the second information) sent by the user, thus overcoming the blindness of pushing messages in the prior art.

Figure 1B

## Description

### Field of the Invention

The present invention relates to the communication field, and in particular, to a method and apparatus for pushing messages to communication terminals.

### Background of the Invention

With the development of communication technologies, new services are emerging. For example, the Short Message Service (SMS) on communication terminals such as a Mobile Station (MS) develops rapidly. In response to huge mobile user groups, operators apply a new form of the message pushing service, namely, SMS-based advertisement.

However, most of the SMS-based advertisements in the traditional art are sent in groups, without differentiating the recipients. That is, the SMS-based advertisements are sent in groups to all MSs without differentiating the MSs according to their user's hobbies. This mode that the SMS-based advertisements are sent in groups has the following defects: (1) In the group transmission mode, the specific requirements of users can not be met; (2) The group transmission mode leads to plenty of junk short messages, and wastes public communication resources.

Therefore, to achieve the best effect of the SMS-based advertisements, it is necessary to discover the interests and hobbies of users, understand the instant and potential requirements of the users, and provide individualized SMS-based advertisement services for the users.

### Summary of the Invention

Embodiments of the present invention provide a method and apparatus for pushing messages, so as to sort out real target MSs and push messages to them by analyzing the correlation between the messages sent by MSs and the messages to be pushed to MSs.

A method for pushing messages includes:

categorizing a first message according to a first category set, creating a first mapping relation between the first message and the category in the first category set; categorizing a second information sent by a message source according to a second category set, and creating a second mapping relation between the message source that sends the second information and the category in the second category set;

sorting out each category in the second category set that matches the corresponding category in the first category set which is in the first mapping relation with the first message according to the relation between the category in the first category set and the category in the second category set, and determining the corresponding message source according to the second mapping relation; and

pushing the first message to the determined corresponding message source.

An apparatus for pushing messages includes:

a first message processing module, adapted to categorize a first message according to a first category set, and create a first mapping relation between the first message and the category in the first category set;

a second information processing module, adapted to obtain a second information sent by a message source, categorize the second information according to a second category set, and create a second mapping relation between the message source that sends the second information and the category in the second category set according to the categorization result;

a message matching module, adapted to sort out each category in the second category set that matches the corresponding category in the first category set which is in the first mapping relation with the first message according to the relation between the category in the first category set and the category in the second category set, and determine the corresponding message source according to the second mapping relation; and

a message pushing module, adapted to push the first message to the determined corresponding message source.

In the embodiments of the present invention, the user requirements are analyzed according to the messages sent by MSs, and the messages to be pushed are matched with reqirements, and the specific MS group for receiving the messages to be pushed is determined, thus meeting the specific requirements of the users, overcoming the blindness of pushing messages, and avoiding waste of public communication resources.

### Brief Description of the Drawings

Figure 1A and Figure 1B are flowcharts of pushing advertisements to a specific MS according to the short messages sent by the MS of the user in an embodiment of the present invention;

Figure 2 is a flowchart of preprocessing and integrating short messages in an embodiment of the present invention;

Figure 3 shows categorization of short messages in an embodiment of the present invention;

Figure 4 is a user interest measure list provided in an embodiment of the present invention;

Figure 5 shows a process of obtaining a user community network according to the short message database in an embodiment of the present invention;

Figure 6 is a flowchart of entering an advertisement and categorizing the advertisement in an embodiment of the present invention; and

Figure 7 shows a structure of an apparatus for pushing messages in an embodiment of the present invention.

### Detailed Description of the Invention

A method for pushing messages in an embodiment of the present invention includes:

categorizing a first message according to a first category set, and creating a first mapping relation between the first message and the category in the first category set;

obtaining a second information sent by a message source, categorizing the second information according to a second category set, and creating a second mapping relation between the message source that sends the second information and the category in the second category set according to the categorization result;

sorting out each category in the second category set that matches the corresponding category in the first category set which is in the first mapping relation with the first message according to the relation between the category in the first category set and the category in the second category set, and determining the corresponding message source according to the second mapping relation; and

pushing the first message to the determined corresponding message source.

The foregoing method is detailed below, supposing an SMS-based advertisement is pushed to an MS. That is, the scenario is supposed to be: a first message is an advertisement message (including but not limited to product advertisement, service broadcast, or service advertisement); a message source is a communication apparatus that can send messages, for example, an MS; and a second information is short messages sent by the MS through the Short Message Service Center (SMSC). In this scenario, the short messages sent by the MS need to be categorized, and the advertisements with different contents need to be categorized. Through the relation between the categories of the short messages and that of the advertisements, the MSs suitable for receiving different advertisements to be pushed may be determined.

For ease of description, this embodiment supposes that the short message categories are the same as the advertisement categories, namely, each short message category uniquely corresponds to an advertisement category.

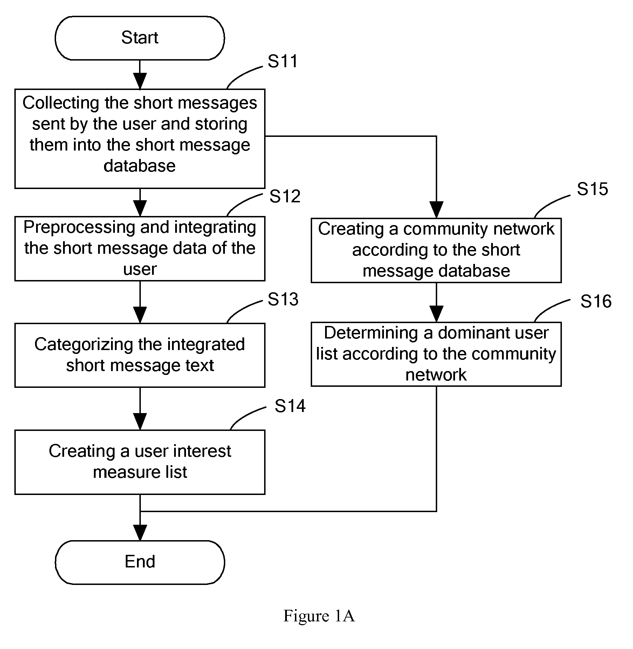

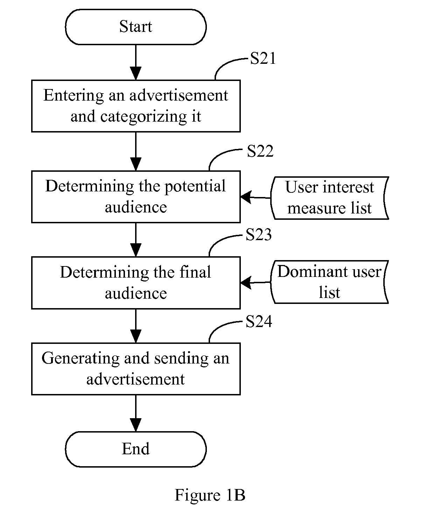

Figure 1A and Figure 1B are flowcharts of pushing advertisements to a specific MS according to short messages sent by an MS of a user in an embodiment of the present invention. Figure 1A includes the following steps:

Step S 11: Collecting short messages sent by an MS of a user, and storing the short messages into a database.

Step S12: Preprocessing and integrating short message data of the user.

Step S 13: Categorizing integrated short message text.

Step S 14: Creating a mapping relation between identifier of the MS that sends the short messages and each short message category, and creating a user interest measure list for each short message category.

Step S 15: Creating a community network for exchanging short messages between MSs according to the short messages stored in the short message database.

Step S16: Determining a dominant user list according to the created community network.

The foregoing steps S12, S 13, and S 14 may be performed before or after S15 and S16, or may be performed concurrently with S15 and S16.

An embodiment showed in figure 1B includes the following steps:

Step S21: Entering advertisements and categorizing the advertisements.

Step S22: Determining a user interest measure list specific to the advertisement among the created user interest measure lists according to the category of the current advertisement, namely, determining the potential audience.

Step S23: Determining the final audience, namely, the MSs to which the advertisement is finally pushed, according to the determined user interest measure list (potential audience) and the dominant user list.

Step S24: Generating advertisements of different styles according to different categories of MSs, and sending the advertisements to the corresponding MSs.

In some other embodiments, the foregoing steps are detailed below.

Step S11 is detailed below:

First, an empty short message database is created. The short message database may be created by a database management system based on the conventional art, for example, an Oracle system. The table structure of the short message database includes at least: a sender terminal identifier (ID), a recipient terminal identifier (ID), short message sending time, and short message content, as shown in Table 1:

Table 1

| Sender ID | Recipient ID | Date and Time of Sending | Short Message Content |
| --- | --- | --- | --- |

The sender and recipient of a short message may be an ordinary user or an entity connected to the SMSC, namely, a Short Message Entity (SME). However, the short message of an SME does not reflect the personal interest of the user. Therefore, the embodiment of the present invention mainly relates to the point-to-point short messages of ordinary users. Thus, in the embodiment, the short messages sent by ordinary users are collected. The short messages sent by the user may be in diversified forms, for example, plain text message, and multimedia message that carries sound, image and video. This embodiment supposes that the collected short messages are text messages of ordinary users.

The short messages may be collected in different ways, for example:

Collection mode 1: Receiving the short messages sent by the communication terminal and forwarded by the SMSC in real time.

Collection mode 2: Obtaining the short messages from the original bill files of the communication terminal, namely, using the original bill files on the accounting server as data sources, and reading each short message from the original bill files; and

Collection mode 3: Monitoring and obtaining the short messages sent by the MS to the SMSC.

The foregoing modes of collecting short messages are exemplary only, and the present invention is not limited to such modes.

As required, a time period of collecting short messages may be set. For example, the short messages are collected daily, weekly or monthly. Upon expiry of the time period, the collected short message data is available for subsequent analyzing and processing.

Step S12 is detailed below:

Generally, the size of a short message is limited (for example, less than 70 Chinese characters), and the input of the short message content is inconvenient. Therefore, the quantity of short messages obtained through step S11 is very large, and the contents and topics of the short messages are rather distributed, making the subsequent text categorization process much time-consuming and complicated, and affecting the accuracy of user requirements seriously. Therefore, the group transmitting numbers are removed firstly. A specific removing method is: A threshold value k is set according to the data collection time. If the quantity of short messages sent by a mobile phone number exceeds that threshold value, the mobile phone number is determined as a group transmitting number, and all short message data sent by the mobile phone number needs to be deleted from the short message database. The quantity of short messages sent by a specific mobile phone number may be determined by using the statistic function of the database management system. The threshold is set to a value that reflects an exception obviously. For example, if the time limit of collecting short messages is one day, the threshold value may be k=300; if the time limit of collecting short messages is one month, the threshold value may be k=2000.

Secondly, in some situation, the short message carries a small number of characters; sometimes a content is sent through several short messages. Moreover, the topics of message communication with different recipients are not necessarily the same. Therefore, the short messages are clustered according to the short message content with reference to the time dependencies and object dependencies of the short message text. The time dependencies and object dependencies may be obtained through sorting of the short message database, where primary keyword is the MS number of the short message sender and secondary keyword is the MS number of the short message recipient. By clustering the Short messages, the quantity of short message texts drastically may be reduced; the text topics may be relatively centralized, so as to facilitate subsequent categorization of the short messages.

To simplify the clustering algorithm, an embodiment of the present invention provides a text integration method based on sliding windows. The specific method is: A proper window size "w" (w is a natural number) is predetermined. For a new short message text, the similarity is calculated between the new short message text and the latest w integrated short message texts, and the most similar short message texts with similarity higher than the threshold are integrated. By adjusting the w value properly, this algorithm makes the time and complexity controllable while ensuring the effect.

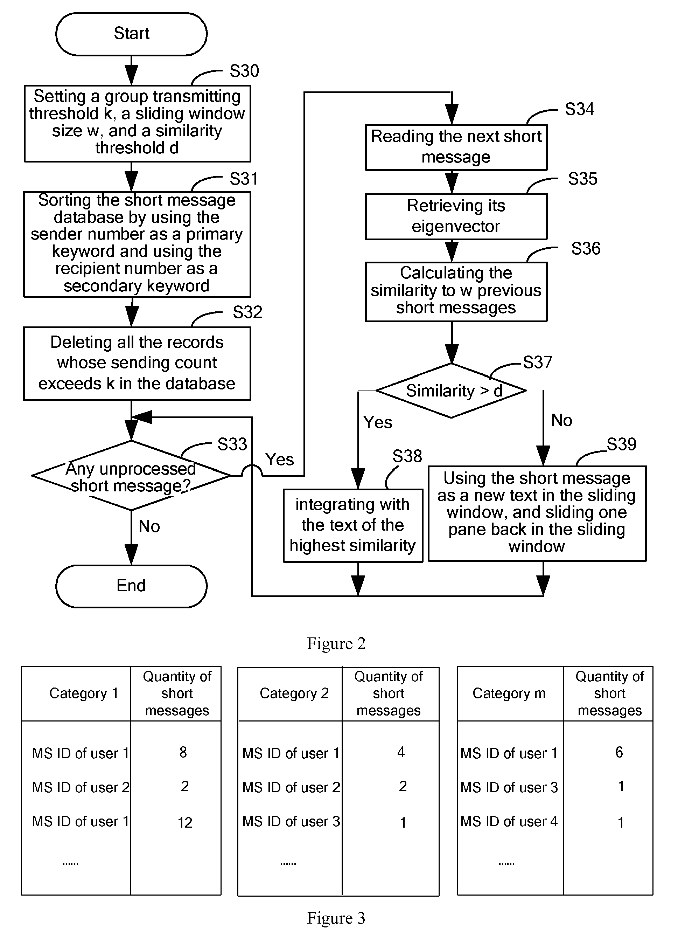

Figure 2 is a flowchart of preprocessing and integrating short messages in an embodiment of the present invention. The process includes:

Step S30: Setting a group transmitting threshold k, a sliding window size w (that is, the quantity of the short message in the sliding window is w), and a similarity threshold d.

Step S31: Sorting the short message database by using the sender number as a primary keyword and using the recipient number as a secondary keyword.

Step S32: Deleting all the records with the quantity of sent short messages exceeding the threshold k in the database, namely, deleting the records of short messages sent in groups.

Step S33: Judging whether the short message database contains any unprocessed short message; if any unprocessed short message is contained, proceeding to the following steps; if no unprocessed short message is contained, ending the process.

Step S34: Reading a next short message.

Step S35: Retrieving the vector of the read short message.

Step S36: Calculating the similarity between the vector of the current short message and that of the w previous short messages.

Step S37: Judging whether the similarity is greater than the similarity threshold d; if it is greater, proceeding to step S38; otherwise, proceeding to step S39.

Step S38: Integrating the short message with the text of the short message which has the greatest similarity, and going back to step S33.

Step S39: The short message is showed in the sliding window as a new text, and the sliding window slides one pane down; and going back to step S33.

In the foregoing process, a group transmitting threshold, a similarity threshold and a sliding window size need to be specified beforehand. Such parameters are adjustable as required.

In step S36, the text similarity can be calculated in the following way:

For two texts S1 and S2, let the vector space composed of all their feature words be V = { $X_1$, $X_2$, $X_3$, ..., $X_n$ }, where X;is a feature word. Let the vector of the text S1 be $V_1 = (\omega_1, \omega_2, \cdots, \omega_n)$ , where $\omega_i$ is the frequency of the feature word $X_i$ in the text S1; let the vector of the text S2 be $V_2 = (\varphi_1, \varphi_2, \cdots, \varphi_n)$, where $\varphi_i$ is the frequency of the feature word $X_i$ in the text S2. The similarity between the two texts is:

$$Sim(S_1, S_2) = \overrightarrow{V_1} \cdot \overrightarrow{V_2} = \frac{\sum\limits_{i=1}^{n} \omega_i \cdot \varphi_i}{\sqrt{\sum\limits_{i=1}^{n} \omega_i^2} * \sqrt{\sum\limits_{i=1}^{n} \varphi_i^2}}$$

In step S38, the texts are integrated by adding the frequency of the corresponding feature words and normalizing them. Specifically, supposing that the vector of the text S1 and text S2 are represented by the above formulas, the vectors corresponding to feature items are added up and then the integrated texts are standardized. In Step S39, the time of sending the new text is the time of sending the newly integrated text.

A preferred method for normalizing the integrated vector is the minimum and maximum normalization method. Supposing that the vector of the new text obtained by adding the frequency of the feature word is $V = \{\upsilon_1, \upsilon_2, \cdots, \upsilon_n\}$, wherein $\upsilon_i$ is the frequency of the feature word $X_i$ in the new text, and supposing that the vector after normalization is $V = \{\phi_1, \phi_2, \cdots, \phi_n\}$, wherein $\phi_i$ is the frequency of the feature word $X_i$ in the standardized new text, the formula between them is:

$$v = \frac{\phi_i - Min\phi_i}{Max\phi_i - Min\phi_i}$$

The quantity of original short messages corresponding to the new text is recorded at the time of integrating the vector of the text. In practice, it can be realized by adding 1 to the quantity of the short messages included in the new text at each time of integrating.

Table 2 shows a format of the preprocessed and integrated short message text:

Table 2

| Sender ID | Date and Time of Sending | Short Message Text Vector | Quantity of Original Short Messages |
|---|---|---|---|

The integrated short message texts may be stored into a database, or saved as a file or other formats.

In this embodiment, the time dependencies, object dependencies and content dependencies specific to short messages are applied. Therefore, the integrated short message texts have relatively centralized topics, the quantity of short messages is slashed, and the integrated short message texts are easier to categorize subsequently.

Step S 13 is detailed below:

The short message text categorization is to arrange the short message text sent by the MS into a predefined short message category. The technologies for categorizing Chinese texts include one of the following: Multi-classifier integration method, Support Vector Machine (SVM), K-Nearest Neighbor (KNN) method, Naive Bayes method, decision tree, neural network, and maximum entropy model, which are all applicable to the categorization process herein. The separation plane model of the SVM overcomes the impact of sample distribution, redundancy features, and over-fitting, and is highly capable of generalization and superior to other methods in terms of effect and stability. Therefore, the SVM method is preferred herein as a categorization algorithm. However, the present invention is not limited to the SVM algorithm.

For example, a Library for Support Vector Machines ,LIBSVM, software package is used to perform SVM categorization.

First, several short message texts are selected from the integrated short message database and used as a training set, and the training set is categorized manually. The selection of the training texts needs to cause little difference between the quantity of one category of texts and the quantity of another. In practice, it is appropriate to specify the quantity of each category of texts beforehand, for example "100", and then read the short message texts from the short message database one by one, and categorize the texts manually. If the quantity of a category of texts is deficient, this category of texts are marked and arranged into the training set. If the quantity of a category of texts reaches the specified quantity, such texts are discarded simply, and the next text is read from the short message database.

After the training set is obtained, it is necessary to retrieve the feature words of the training set, and to express the training set as the corresponding vector by using a Vector Space Model, VSM. The vector may be retrieved in many ways such as the "tf * idf" method, the details of which are given in Sebastiani F. Machine learning in automated text categorization, ACM Computing Surveys, 2002,34(1): 1-47.

After the foregoing processing, the training set may be expressed as:

$$T = \{T_i \mid T_i = (W_i, c_i), \quad c_i \in C\}$$

wherein $W_i$ is the vector of training text i in the training set, and C is the manually sorted category set (namely, the second category set) of the vector. The vector $W_i$ of text i is expressed as:

$$W_i = (w_{i1}, w_{i2}, \cdots, w_{in})$$

wherein $w_{ik}(k = 1,2,\cdots d)$ is the extent of contribution by the feature item k to text i, and n is the dimension of the vector. The manually sorted category set C is expressed as:

$$C = \{c_1, c_2, \cdots, c_m\}$$

wherein m is a category quantity.

Subsequently, the text model training is performed through an LIBSVM tool. The training steps are as follows:

(1) Setting system parameters. The system parameters may be set through the svm_parameter method provided by the LIBSVM software package. In this embodiment, the SVM of the C_SVC type is used, and its kernel function is a Radial Base Function (RBF):

$$K(\mathbf{x}_i, \mathbf{x}_j) = \exp(-\gamma \mid \mathbf{x}_i - \mathbf{x}_j \mid^2)$$

Suppose that the default value of the parameter y of the RBF kernel function is 0.5; the svm_type attribute has five optional values: C_SVC, NU_SVC, ONE_CLASS, EPSILON_SVR, and NU_SVR, and C_SVC is used in this embodiment; the C attribute indicates the quantity of categories, and is set to the number of elements in the category set, namely, "m"; the "kernel_type" attribute has five optional values: LINEAR, POLY, RBF, SIGMOID, and PRECOMPUTE, and RBF is used in this embodiment; the "shrinking" attribute is set to 1 in this embodiment. Besides, from the perspective of computer operation, the buffer size is set to 40 MB and the operation precision is set to 0.001 in this embodiment. Such parameters correspond to "cache_size", "eps", and "shrinking" attributes of svm_parameter respectively. In summary, the parameters selected in this embodiment are:

> svm_type = C_SVC;
> C = m;
> kernel_type = RBF;
> cache_size = 40;
> eps = 0.001;
> shrinking =1

(2) Setting the training attributes.

After the parameters of the SVM are set, the training set serves as the input of the SVM. After training, a categorization model of the categorizer of the SVM is generated. In the LIBSVM software package, svm_problem is used to describe the current categorization. The *l* attribute of svm_problem is set to describe the quantity of elements in the training set T; the *x* attribute is set to describe the training text vector set of the training set T, and the *y* attribute is set to describe the category set of the corresponding training text.

In the use of the LIBSVM, the x attribute of svm_problem is a 2-dimensional svm_node array. The first dimension is set to the quantity of elements in the training set T, and the second dimension is set to the dimension of the training text vector in the training set T. Each element in the training set T corresponds to a line in x. For the element x[i][j] in row i and column j in the x attribute of svm_problem, its "index" attribute is set to "j+1", and its "value" attribute is set to the value of dimension j of the vector of training text i in the training set.

The y attribute of svm_problem is a 1-dimensional array, and the value of y is the quantity of elements in the training set T. For dimension i of y, its value is set to category $c_i$ of training text i in the training set T.

(3) Training the SVM categorizer model.

In the LIBSVM software package, the static svm_train method of the SVM may be invoked to implement the training of the SVM categorizer. This method uses svm_problem and svm_parameter as parameters, both having been set in the steps described above. The returned value of the svm_train method is the object of the svm_model type, and this object is the SVM categorizer model.

(4) Categorizing the short messages.

The SVM categorizer is constructed through the foregoing steps. Subsequently, the short message texts are categorized. Before the unknown texts are categorized, the text d needs to be expressed as its vector according to the VSM model:

$$w_d = (w_{d1}, w_{d2}, \cdots, w_{dn})$$

The LIBSVM software package provides the function of predicting the category of an unknown text by using the SVM categorizer model. The vector $w_d$ of an unknown text is entered in the same way of entering the training data in the training set except that the "value" attribute of the corresponding svm_node does not need to be set.

After the vector of the text to be predicted is entered, the predication is implemented by invoking the static svm_predict method of the SVM. This method uses svm_model and svm_node arrays as parameters. The svm_model array is the SVM categorizer model in step 3, and the svm_node array corresponds to the data entered for the text of the category to be predicted. The svm_predict method returns the text category predicted through the svm_model.

After the short message texts are categorized through the foregoing steps, each short message text is included into a specific category. In practice, a category file is created beforehand. If the category of a short message is determined, the MS number that sends the short message text is recorded into the category. That is, a mapping relation is created between the ID of the MS that sends the short message and the corresponding category. After all short messages in the database are categorized in the foregoing method, the short message categorization diagram is shown in Figure 3.

In Figure 3, there are m categories of short messages in total. Each category includes several IDs of MSs that send the corresponding category of short messages, for example, MS ID of user 1, MS ID of user 2, MS ID of user 3, and MS ID of user 4.

The result of categorizing the short messages through the foregoing steps has the following features:

1. An MS may be included into multiple categories. For example, in Figure 3, the MS of user 1 is included into category 1, category 2 and category m.

2. A category may include a same MS ID repeatedly. For example, category 1 includes "MS ID of user 1" twice.

3. The MSs included in a category are disorderly. For example, "MS ID of user 1" and "MS ID of user 2" in category 1 are not sequential.

4. The categorization result includes a large amount of data; for each integrated text that needs to be categorized, a result corresponding to it exists in the result set; that is, the categorization result includes the MS ID corresponding to the integrated short message text, and the quantity of short messages included in an integrated short message text. For example, category 1 includes two MS IDs of user 1, which correspond to 8 short messages and 12 short messages respectively.

The categorization result includes a large amount of data, and the MS IDs in each category are disorderly. Such data cannot express the interest of different MS users toward a specific category directly, thus affecting the correctness of pushing the SMS-based advertisements.

To solve the foregoing problems, it is necessary to make statistics about the frequency of an MS ID appearing in each category, calculate the quantity of this category of short messages sent by the MS, and arrange the MS users in descending order according to the short message quantity.

In an embodiment, Step S14 is detailed below:

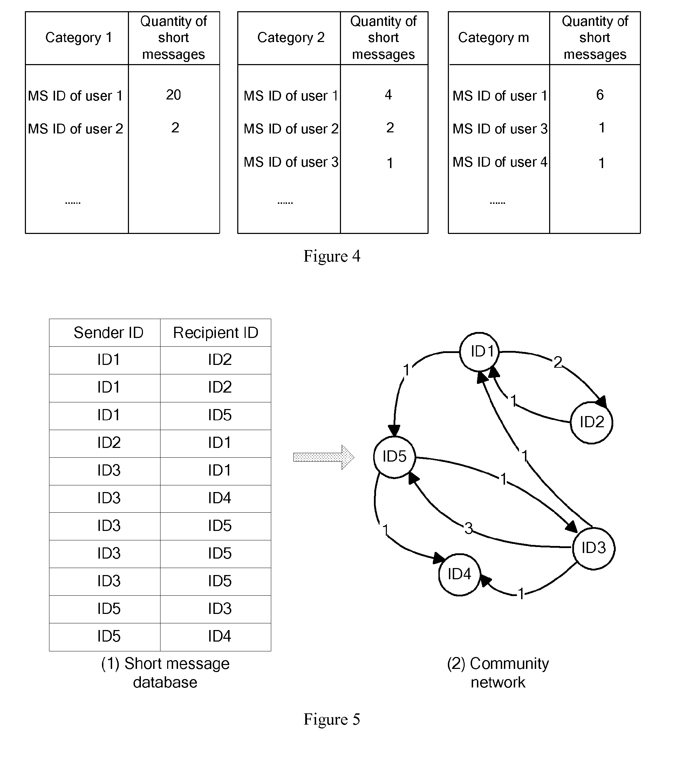

A user interest measure list shown in Figure 4 is generated according to the categorization result of the foregoing SVM categorizer.

For example, in the user interest measure list in Figure 4, the same MS ID does not appear in the same category repeatedly. The MS that appears at a higher frequency in a specific category is more interested in this category. In practice, a category includes the same MS usually more than once. Therefore, the result requires less storage space than the data result set after SVM categorization.

Further, a weight may be assigned to each categorization result that appears at different time to calculate the extent of the user interest. The short message texts are chronological, and the short message that arrives earlier appears in the categorization result earlier. A lower weight value is assigned to the earlier categorization result, and a higher weight value is assigned to the later categorization result. In this way, the calculated interest extent better reflects the latest interest and requirements of the user. If the short messages are rather old, the weighted interest calculation method is preferred.

In another embodiment, the method for creating a community network according to the short message database in step S15 is described below:

In this embodiment, the community network is discovered from the perspective of the short message receiving/sending of the MS. In the virtual world of short message communication, the frequently communicating users are generally closely related, and the seldom communicating users are little related. Therefore, the short message interaction between users and the frequency of interaction decide the user's influence extent and influence range in the community.

In this embodiment, a directional network G=(V,{E},W) is used to represent a user community; the network node $v \in V$ represents the MS of the user; the network edge (namely, directional arc between nodes) $e \in E$ represents the short message receiving and sending relation between users, and the weight value on the edge $e_i$ "$w_i \in W$" indicates the quantity of short messages between users. Figure 5 shows an instance of a user community obtained from the short message database. In Figure 5, ID1, ID2, ID3, ID4 and ID5 represent different MS IDs respectively.

The process of creating a community network is as follows:

(1) At the time of initialization, the network is empty, and the short message data record pointer is i=1.

(2) The sender MS ID (such as a mobile number) and the recipient MS ID (such as a mobile number) of short message i are read from the short message database.

(3) A judgment is made about whether the sender MS ID and the recipient MS ID are network node flags. If no flag exists, a node is created and marked as the corresponding MS ID; a directional arc is created from the sender to the recipient, and a weight value "1" is marked on it. Otherwise, the weight value from the sender node to the recipient node is marked as the original weight value plus 1.

(4) If the short message database still contains data, the process goes back to (2) to repeat the foregoing steps; otherwise, the process is ended.

The communication network obtained through the foregoing method may be very huge. The most complex situation is: The MSs of all users are directly or indirectly related so that all MS users are in the same community network. Besides, the user may enter incorrect numbers occasionally. The mistakenly sent short messages do not indicate close relationships between users. Consequently, the obtained network does not reflect the relationships between users exactly.

Two methods are proposed for solving the problems:

Method 1: A strongly connected component is found in the community network. A strongly connected component means that all nodes are mutually reachable, and "reachable" means that a directional simple path exists between nodes.

Method 2: Only the relationships between frequently contacted users are considered, and the relationships between seldom contacted users are ignored. In practice, the edges whose weight is less than a threshold are deleted from the network. The threshold may be selected according to the actual conditions of the system, and generally ranges from 2 to 5.

Through the foregoing process, the directional network includes several connected components. Connected components may be obtained from the directional network through many methods such as the depth-first traversal algorithm.

In practice, the network uses an adjacency matrix or adjacency table as a storage structure. In this embodiment, the adjacency table is preferred as a storage structure. In this storage structure, the table head node stores a vector. The head node includes at least a field for storing the MS number of the user and a pointer that points to the first adjacent edge; the table node indicates an edge and includes at least two data fields: the pointer to the next adjacent node and the weight of this edge.

In another embodiment, in step S16, the detailed process of determining dominant users according to the community network includes:

At the time of determining the dominant users, this embodiment defines the user's dominant coefficient to ensure enough coverage of the short message. The quantity of dominant users is controlled within a proper value range. The calculation of the dominant coefficient depends on the user's dominance extent and dominance range.

The dominance extent p of user i over j is defined as the frequency of short message interaction between MS i of user i and MS j of user j, and is calculated through:

$$p_{i,j} = \lambda_1 a_{i,j} + \lambda_2 a_{j,i}$$

wherein $a_{i,j}$ is a weight on arc <vi,vj>, namely, the quantity of short messages sent by MS i to MS j; $a_{j,i}$ is a weight on arc <vj,vi>, namely, the quantity of short messages received by MS i from MS j; $\lambda_i$ (i=1, 2) is a constant and $\lambda_1+\lambda_2$ =1, representing different weight values of sending and receiving. The sender has greater initiative, and better reflects its influence, and the quantity of short messages received by the sender reflects the influence effect of the sender. Therefore, in this embodiment, $\lambda_1$ =0.8, and $\lambda_2$ = 0.2, and the values may be changed on the basis of sufficient practice.

The user's dominance extent is defined as the sum of the user's dominance extents over all other users, namely

$$p_i = \sum p_{i,k}$$ .

The user's dominance range r is defined as:

$$r_i = \eta_1 d_{i,out} + \eta_2 d_{i,in}$$

wherein $r_i$ represents the dominance range of communication terminal i, $d_{i,out}$ represents the total quantity of short messages sent by communication terminal i, $d_{i,in}$ represents the total quantity of short messages received by communication terminal i, $\eta_i$(i=1, 2) is a constant and $\eta_1+\eta_2$=1, representing different weights of sending and receiving the short messages; likewise, $\eta_1$=0.8 and $\eta_2$=0.2.

The dominant coefficient $L_i$ of MS i is calculated through:

$$L_i = \gamma_1 \frac{p_i}{avg(p)} + \gamma_2 \frac{r_i}{avg(r)}$$

wherein $p_i$ is the dominance extent of MS i; $avg(p)$ is the average dominance extent of all MSs; $r_i$ is the dominance range of MS I; $avg(r)$ is the average dominance range of all MSs. $\gamma_i$ (i=1, 2) is a constant and $\gamma_1+\gamma_2$=1. In practice, the weight between the dominance extent and the dominance range is adjustable according to the actual conditions.

Once the dominant coefficient corresponding to the MS is obtained, $L_i$ is arranged in descending order to obtain the sequence value of the user dominant coefficient in the network. For example, for the community network shown in Figure 5, the corresponding calculation result is shown in Table 3 (where the equilibrium coefficients of the dominance extent and dominance range are $\gamma_1$=0.4 and $\gamma_2$=0.6 respectively):

Table 3

| MS ID | ID1 | ID2 | ID3 | ID4 | ID5 | avg |
|---|---|---|---|---|---|---|
| Dominance Extent p | 2.8 | 1.2 | 4.2 | 0.4 | 2.4 | 2.2 |
| Dominance Range r | 2.0 | 1.0 | 2.6 | 0.4 | 2.0 | 1.6 |
| Dominant Coefficient L | 1.259 | 0.593 | 1.739 | 0.223 | 1.186 | |

Table 3 reveals that the final dominant coefficients of the five users are ranked as ID3, ID1, ID5, ID2, and ID4 sequentially. A typical result of the sequence list is shown in Table 4:

Table 4

| MS ID | Dominant Coefficient |
|---|---|
| ID3 | 1.739 |
| ID1 | 1.259 |
| ID5 | 1.186 |
| ID2 | 0.593 |
| ID4 | 0.223 |

Through the foregoing steps S11-S16, the user interest measure list is created for a specific short message category (corresponding to the advertisement category) according to the short message interaction between MSs; and a dominant user list is determined according to the created community network.

The method for categorizing advertisements and the method for determining the audience of advertisements according to the obtained user interest measure list and dominant user list are described below.

In another embodiment, Step S21 is detailed below:

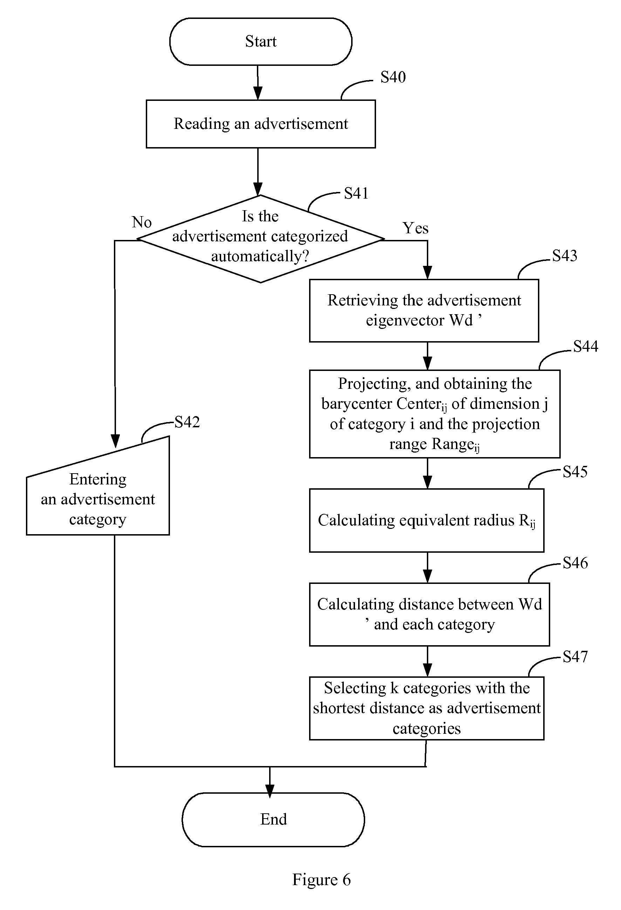

Figure 6 is a flowchart of inputting an advertisement and categorizing the advertisement. At the time of inputting advertisement information, only the advertisement information needs to be inputted, and the information is in the form of text information. The advertisement information needs to be further categorized, and the category information of the advertisement information may also be inputted as required. The category information is consistent with the short message category information, both being predefined. If the category of the advertisement is specified, the advertisement form may be text or any other form such as video, image or audio.

At the time of inputting advertisements, the advertisements may be inputted one by one, or the advertisement information is pre-stored into a file or database file and then inputted in batches.

If no category is specified for the inputted advertisement, the advertisement needs to be categorized. The advertisement texts may be categorized in many ways. One advertisement may belong to multiple product categories. Therefore, the one-category categorization algorithms such as SVM are not applicable. In this embodiment, the categorization algorithm shown in Figure 6 is used to include a single advertisement text into multiple categories. The categorization process is as follows:

Step S40: Reading an advertisement.

Step S41: Determining whether to perform automatic categorization or manual categorization; for automatic categorization, proceeding to step S42; for manual categorization, proceeding to step S43.

Step S42: According to the predefined advertisement category, if the category of the current advertisement is inputted, finishing the categorization of the current advertisement.

Step S43: Retrieving the features of the advertisement text, and expressing the features as $W_{d'} = \{w_{d'1}, w_{d'2}, \cdots w_{d'n}\}$.

Step S44: Projecting category i ($i = 1,2,\cdots,m$) of the training data onto dimension j ($j =1,2,\cdots,n$), and obtaining the barycenter $Center_{ij}$ of dimension j of category i, and the projection range $Range_{ij} = (R_{ij}^-, R_{ij}^+)$, wherein $R_{ij}^-$ is the negative radius and $R_{ij}^+$ is the positive radius from dimension j of category i of the text in the training set to the center. The method is detailed below:

The training set of category i $T = \{T_i | T_i \in T;\ T_i$ is $c_i\}$ is projected to dimension j ($j = 1,2,\cdots,n$), and the data is obtained from the projection in dimension j :

$$T_{1j}, T_{2j}, \cdots, T_{kj}$$

Wherein Tij represents dimension j of text vector i in the training set T of category i and k is the quantity of elements in T. Barycenter $Center_{ij}$ of dimension j is calculated through:

$$Center_{ij} = \frac{\sum_i T_{ij}}{|T|}$$

Projection range $Range_{ij} = (R_{ij}^-, R_{ij}^+)$ , where $R_{ij}^- = \max_s (Center_{ij} - T_{sj})$ and

Step S45: Calculating the equivalent radius $R_{ij}^{Equal}$ through:

$$R_{ij}^{Equal} = \alpha_{ij} R_{ij}^- + (1 - \alpha_{ij}) R_{ij}^+$$

wherein $n_{ij}^+$ is the quantity of texts to the left of $Center_{ij}$ and $n_{ij}^+$ is the quantity of texts to the right of $Center_{ij}$.

Step S46: Calculating the distance ($S_i$) from the advertisement to each category:

$$S_i(w_{d'}) = \sqrt{\sum_{j=1}^{k} \frac{(w_{d'j} - Center_{ij})}{(R_{ij}^{Equal})^2} + \sum_{j=k+1}^{m} \frac{w_{d'j}^2}{\beta^2}}$$

wherein $1/\beta 2$ is a distance coefficient. The categorizer function is not sensitive to this variable, and $\beta$ is 10 in this embodiment. The value of $S_i(W_{d'})$ is calculated to obtain the distance value of the advertisement vector to category i. Smaller values of $S_i(W_{d'})$ indicate that the advertisement is closer to the corresponding category.

Step S47: Finally, determining the category of the advertisement.

A simple implementation method is to use k categories with the shortest distance as categories of the advertisement, for example, k=3; the preferred implementation method is to arrange the distance values in ascending order and then check the change of the two adjacent distance values. If the change is abruptly greater, the advertisement is regarded as belonging to the several categories before the change.

In another embodiment, Step S22 of determining the user interest measure list is detailed below:

After the advertisement texts are categorized, the list of users who are interested in the advertisement needs to be determined. The users in the list are MS users who are interested in the given advertisement, and are arranged from high interest to low interest.

For an advertisement $A_i$ to be pushed, through advertisement categorization, $A_i$ is included into category set $R_i \subseteq C$. For the category $c_j \in R_i$ included in $R_i$, according to the user interest measure list determined in step S 14, all the MS users who are interested in the advertisement may be obtained with reference to the category of the advertisement. The method is detailed below:

(1) Through the advertisement categorization method, $A_i$ is categorized to obtain its category set $R_i = \{c_{i1}, c_{i2}, \cdots c_{ip}\} \subseteq C$ and the similarity set (Si) between advertisement $A_i$ and each element in $R_i$: $S_i = \{s_{i1}, s_{i2}, \cdots s_{ip}\}$.

(2) In the short message categories, the MS ID in a mapping relation with the category in $R_i$ is the MS which is interested in advertisement $A_i$. The inner product $I_{ji}$ between $S_i$ and vector $t_j$ is calculated, where $t_j$ is a vector constituted by the frequency of the MS ID $U_j$ interested in $A_i$ appearing in the corresponding category:

$$ I_{ji} = (S_i, t_j) = \sum_{r=1}^{p} (s_{ir} \times t_{jr}) $$

wherein $t_j = (t_{j1}, t_{j2}, \cdots, t_{jp})$, $t_{jk}$ is the frequency of $U_j$ appearing in $c_{ik}$ ($k = 1, 2, \cdots, p$), and $I_{ji}$ is the extent of interest of the MS ID $U_j$ in the advertisement $A_i$.

(3) $I_{ji}$ is arranged in descending order to obtain a list of users who are interested in the advertisement, namely, a user interest measure list (with the MS ID representing the user).

In another embodiment, Step S23 of determining the final audience is detailed below:

The user interest measure list obtained in step S22 is a list of potential audience. To achieve a better advertisement effect and save advertisement costs, the audience needs to be sifted:

The sifting of audience is based on the following reasons:

(1) The user interest measure list includes multitudinous results and the users who are little interested in the advertisement. If the advertisement is pushed to such users, the advertisement does not arouse the interests of the users and is regarded as a junk message, and is even blacklisted, which makes more advertisement messages unable to be sent in the future. On the other hand, sending of numerous short messages occupies massive network resources, and even leads to network congestion and affects normal sending of short messages.

(2) Generally, users are more confident in the commodities recommended by their friends or relatives than advertisements; therefore, if an advertisement is circulated between the dominant users determined in step S16 in the community network, the quantity of short messages is reduced and the cost of advertisement is decreased, and the advertisement effect is better because the members of the community networks trust each other.

(3) An interest-dominant user list is further obtained according to the interest indicated by each MS and its dominant coefficient, specifically:

The MSs of the users indicated by the interest and dominant coefficient are:

$$ U = \{(I_{1i}, L_1), (I_{2i}, L_2), ..., (I_{ii}, L_i), ..., (I_{ni}, L_n)\} \, . $$

The interest and dominant coefficient serve as an inner product, and a new interest-dominant user list is generated according to the obtained interest dominance extent. The form of the inner product is:

$$ IL_i = I_{ii} \times L_i $$

Wherein ILi is the interest dominance extent of user i; Iii is the interest of the user corresponding to MS i toward category i advertisements determined through the foregoing method; and Li is the dominant coefficient of MS i determined through the foregoing method. The sequence of the MS IDs decided by this inner product is the sequence of the theoretic effects achievable by sending the advertisement to the corresponding users. A typical result of an interest-dominant user list is shown in Table 5:

Table 5

| MS ID | Interest Dominance Extent |
|---|---|
| ID1 | 1.658 |
| ID2 | 1.012 |
| ... | |

(continued)

| MS ID | Interest Dominance Extent |
|-------|---------------------------|
| IDU | 0.125 |

The operator specifies the size (N) of the audience specific to the advertisement to be sent. According to the foregoing method, the category set of the advertisement is $R_i = \{c_{i1}, c_{i2}, \cdots c_{ip}\} \subseteq C$. The final audience is obtained from three aspects: user interest measure list, dominant user list, and interest-dominant user list.

The user corresponding to the MS ID included in the user interest measure list is interested in a specific category of commodities, and has the potentiality of purchasing. Therefore, in practice, N*40% users that show higher interest may be selected as the first part of the final audience from the user interest measure list (N*40% is adjustable; in this embodiment, the upper threshold quantity of users interested in the commodities is 40%).

Dominant users are users who are representative of the community, and are interested in the sent short messages. Therefore, in practice, the users not interested in the category of the current advertisement are removed from the dominant user list first; and then N*10% users with a greater dominant coefficient are selected as the second part of the final audience from the remaining dominant user list (N*10% is adjustable; in this embodiment, the upper threshold quantity of dominant users is 10%).

Finally, the selected first part and the second part are removed from the interest-dominant user list, and N*50% users are selected from the remaining list as the third part of the final audience.

The sum of the foregoing three parts is the final audience selected according to the optimum principle.

The final step S24 of generating and sending an advertisement is detailed below:

An advertisement is sent in either of the following two ways:

(1) The advertisement is sent to all selected users, with the content and form of the advertisement being the same; and

(2) The content and form of the advertisement are individualized.

The technology for sending short messages in groups is rather mature. In this embodiment, the advertisement may be pushed through the SMS group transmission platform in the prior art. Therefore, the SMS-based advertisements in the foregoing two forms are transmitted to the SMS transmission platform in the prior art for being sent directly.

In practice, the MS may have different features and functions. For example, the screens of different MSs may have different sizes and support different quantities of colors. Functionally, some MSs support only text messages, and some support voice messages, image messages and even video messages. Therefore, an optional implementation method is to push advertisements of different forms to the MSs according to different features of the MSs, with a view to maximizing the concern of the MS users about the advertisements.

In practice, the features of the MSs vary sharply. If an advertisement is prepared with reference to all such features, a huge overhead is involved. Such overhead includes not only the overhead for preparing different short message forms, but also a high time overhead caused by selecting an advertisement form for each different MS. Therefore, only two basic implementation modes are considered, namely, the forms of the SMS-based advertisements are limited to: plain text short message, and Multimedia Message Service (MMS) message.

The features of MSs may be obtained through many methods. In fact, the MS identification technology in the Wireless Access Protocol (WAP) application is mature, and may be used directly.

The complete process of determining the audience of different categories of advertisements according to the short messages sent by the MSs is described above through detailed embodiments.

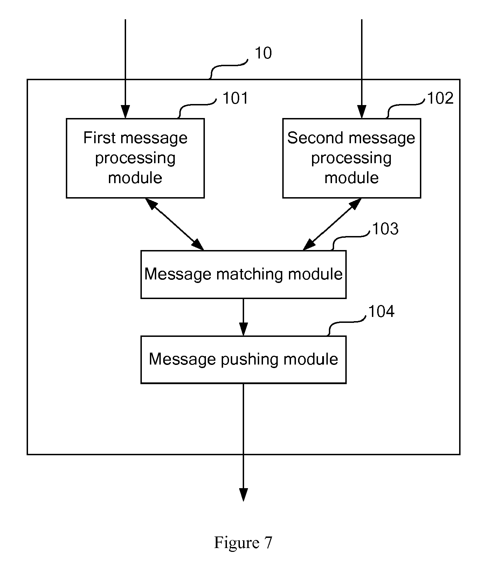

The foregoing embodiments of the present invention provide a method for pushing a corresponding category of advertisements to the MS according to the short messages sent by the MS. Accordingly, an apparatus 10 for pushing messages is provided, as shown in Figure 7. The apparatus 10 includes:

a first message processing module 101, adapted to: categorize a first message according to a first category set, and create a first mapping relation between the first message and the category in the first category set;

a second information processing module 102, adapted to: obtain a second information sent by a message source, categorize the second information according to the second category set, and create a second mapping relation between the message source that sends the second information and the category in the second category set according to the categorization result;

a message matching module 103, adapted to: sort out each category in the second category set that matches the corresponding category in the first category set which is in the first mapping relation with the first message according to the relation between the category in the first category set and the category in the second category set, and determine the corresponding message source according to the second mapping relation; and

a message pushing module 104, adapted to push the first message to the determined corresponding message source.

In another embodiment, the second information processing module 102 is adapted to:

periodically obtain short messages sent by a communication terminal and store the short messages into the local short message database, and integrate multiple similar short message texts sent by the same communication terminal into one short message text after calculating the similarity between the short message texts;

categorize the integrated short message text through a one-category categorization algorithm, and incorporate each integrated short message text into a unique category in the second category set; and create a second mapping relation between the ID of the MS that sends the short message and the category in the second category set; and

count the short messages that are mapped to the same category in the second category set and sent by the same communication terminal, sort the communication terminals according to the quantity of short messages, and generate a user interest measure list.

Optionally, the second information processing module 102 is further adapted to: create a directional network according to the short messages stored in the local short message database by using the communication terminal ID as a network node, using the short message receiving and sending between communication terminals as a directional arc, and using the quantity of exchanged short messages as an arc weight;

calculate the dominant coefficient of the communication terminal corresponding to each node over the communication terminals corresponding to other nodes according to the directional network; and

arrange the communication terminal IDs according to the dominant coefficient, and generate a dominant user list.

In another embodiment, the foregoing message matching module 103 is adapted to: obtain the category in a mapping relation with the first message in the first message processing module, and determine the user interest measure list correlated with the first message; and select several communication terminals from the determined user interest measure list in order of higher interest to lower interest according to the size of audience of the first message. The message pushing module 104 pushes the first message to the selected communication terminals.

Optionally, the foregoing message matching module 103 is further adapted to: determine the interest of each communication terminal toward the first message according to the quantity of short messages corresponding to each communication terminal ID in the user interest measure list correlated with the first message and according to the similarity between the first message and the category in a mapping relation with the first message; generate a user interest measure list specific to the first message; and select several communication terminals from the determined user interest measure list in order of higher interest to lower interest according to the size of audience of the first message. The message pushing module pushes the first message to the communication terminals selected from the user interest measure list.

Optionally, the foregoing message matching module 103 is further adapted to select several communication terminals from the dominant user list generated by the second information processing module 102 in order of higher dominant coefficient to lower dominant coefficient according to the size of audience of the first message. The message pushing module 104 pushes the first message to the communication terminals selected from the dominant user list.

In summary, through the embodiments of the present invention, the user requirements are analyzed according to the message (the second information, exemplified by the short message sent by the MS in the foregoing embodiments) sent by the user; the user requirements are correlated and matched with the message to be pushed (the first message, exemplified by the advertisement pushed to the user in the foregoing embodiments) to determine the specific user groups; and the first message is pushed to the determined user groups, thus meeting the specific requirements of the user, overcoming the blindness of pushing the first message (fore example, advertisement) and avoiding waste of public communication resources.

Although the present invention has been described through some exemplary embodiments, the invention is not limited to such embodiments. It is apparent that those skilled in the art can make various modifications and variations to the invention without departing from the spirit and scope of the invention. The present invention is intended to cover these modifications and variations provided that they fall in the scope of protection defined by the following claims or their equivalents.

**Claims**

1. A method for pushing messages, comprising:

 categorizing a first information according to a first category set;
 creating a first mapping relation between the first information and a category in the first category set;
 categorizing a second information sent by a message source according to a second category set;
 creating a second mapping relation between the message source that sends the second information and a category in the second category set;
 sorting out each category in the second category set that matches the corresponding category in the first category set which is in the first mapping relation with the first information according to a relation between the category in the first category set and the category in the second category set;
determining the corresponding message source according to the second mapping relation; and
pushing the first information to the determined corresponding message source.

**2.** The method of claim 1, wherein the categories in the first category set uniquely correspond to or are identical with the categories in the second category set.

**3.** The method of claim 1, wherein: the message source is a communication terminal, and the second information represents more than one short message sent by the communication terminal.

**4.** The method of claim 3, wherein: before categorizing the second information sent by the message source according to the second category set, the method further comprises a step of obtaining the second information sent by the message source, and the step of obtaining comprises:

receiving short messages sent by the communication terminal and forwarded by a Short Message Service Center ,SMSC, in real time; or
obtaining short messages from original billing records of the communication terminal; or
monitoring and obtaining short messages sent by the communication terminal to a Short Message Service Center ,SMSC,.

**5.** The method of claim 3, wherein the process of categorizing the second information according to the second category set comprises:

periodically obtaining short messages sent by the communication terminal and storing the short messages into a short message database, and integrating multiple similar short message texts into one short message text after calculating similarity between the short message texts; and
categorizing the integrated short message text through a one-category categorization algorithm, and incorporating each integrated short message text into a unique category in the second category set.

**6.** The method of claim 5, wherein the one-category categorization algorithm comprises but is not limited to a Support Vector Machine (SVM) algorithm.

**7.** The method of claim 5, wherein the process of integrating multiple similar short message texts into one short message text comprises:

sorting the short messages stored in the short message database by using the sender as a primary keyword and using the recipient as a secondary keyword; and
setting a sliding window with a size of w for integrating texts, reading the sorted short messages from the short message database one by one, calculating the similarity between the read short message and the w short messages in the sliding window, and integrating the short messages with the similarities greater than or equal to a similarity threshold into one short message text; if the similarities between a current short message and the w short message in the sliding window are less than the similarity threshold, using the current short message as a new short message text in the sliding window.

**8.** The method of claim 7, wherein: the method for calculating the similarity comprises an included Consine Angle similarity between two feature word vectors; and the process of integrating the short message texts comprises: adding up the short message texts that are sent by the same communication terminal and normalizing the short message texts with the similarity greater than or equal to the similarity threshold directly according to a frequency of a feature word normalizing.

**9.** The method of claim 5, comprising: after incorporating each integrated short message text into a unique category in the second category set, creating a second mapping relation between an Identifier (ID) of a Mobile Station (MS) that sends the short message and the category in the second category set.

**10.** The method of claim 3 or 5, comprising:

generating a user interest measure list for each category in the second category set if multiple identical communication terminal IDs are mapped to the same category in the second category set;

determining the user interest measure list correlated with the first information according to the category in a mapping relation with the first information; and

selecting several communication terminals from the determined user interest measure list in order of higher interest to lower interest according to a size of audience of the first information, and pushing the first information to the selected communication terminals.

**9.** The method of claim 8, wherein the process of generating the user interest measure list comprises:

counting the number of the short messages sent by the same communication terminal ID if multiple identical communication terminal IDs are mapped to the same category in the second category set, and generating the user interest measure list for each category in the second category set 12. The method of claim 10, wherein the process of generating the user interest measure list comprises:

determining the interest of each communication terminal toward the first information according to the quantity of the short messages corresponding to each communication terminal correlated with the first information and according to a distance between the first information and the category in a mapping relation with the first information; and

generating the user interest measure list for each category in the second category set.

**13.** The method of claim 3 or 5, further comprising:

creating a directional network by using the communication terminal ID as a network node, using short message receiving and sending between communication terminals as a directional arc, and using the quantity of exchanged short messages as an arc weight;

calculating a dominant coefficient of the communication terminal corresponding to each node over the communication terminals corresponding to other nodes according to the directional network;

arranging the communication terminal IDs according to the dominant coefficient, and generating a dominant user list;

selecting several communication terminals in one of the following ways:

selecting several communication terminals from the dominant user list in order of higher dominant coefficient to lower dominant coefficient according to a size of audience of the first information, and pushing the first information to the selected communication terminals.

**14.** The method of claim 3 or 5, further comprising:

creating a directional network by using the communication terminal ID as a network node, using short message receiving and sending between communication terminals as a directional arc, and using the quantity of exchanged short messages as an arc weight;

calculating a dominant coefficient of the communication terminal corresponding to each node over the communication terminals corresponding to other nodes according to the directional network;

arranging the communication terminal IDs according to the dominant coefficient, and generating a dominant user list; and

selecting several communication terminals on the basis of the user interest measure list and the dominant user list according to a size of audience of the first information, and pushing the first information to the selected communication terminals.

**15.** The method of claim 14, wherein the process of selecting several communication terminals on the basis of the user interest measure list and the dominant user list according to the size of audience of the first information comprises:

working out an inner product of the interest and the dominant coefficient for the same communication terminal according to the user interest measure list and the dominant user list, and obtaining an interest dominance extent of the communication terminal toward the first information;

arranging the corresponding communication terminal IDs according to the interest dominance extent, and generating an interest-dominant user list; and

selecting several communication terminals from the interest-dominant user list in order of higher interest dominance to lower interest dominance according to the size of audience of the first information, wherein the several selected communication terminals are different from the communication terminals selected in the user interest measure list and dominant user list.

**16.** The method of claim 14, wherein the process of selecting several communication terminals on the basis of the user interest measure list and the dominant user list according to the size of audience of the first information comprises:

deleting the communication terminal IDs that are included in the dominant user list but are not included in the user interest measure list correlated with the first information;

rearranging the communication terminal IDs in the dominant user list according to the dominant coefficient, and generating a new dominant user list; and

selecting several communication terminals from the new dominant user list in order of higher dominant coefficient to lower dominant coefficient according to the size of audience of the first information.

**17.** The method of claim 13, wherein the process of calculating the dominant coefficient of the communication terminal corresponding to each node over the communication terminals corresponding to other nodes comprises:

calculating a dominance extent of communication terminal i over communication terminal j :

$$p_{i,j} = \lambda_1 a_{i,j} + \lambda_2 a_{j,i} \; ;$$

where $a_{i,j}$ is the quantity of short messages sent by communication terminal i to communication terminal j; $a_{j,i}$ is the quantity of short messages received by communication terminal i from communication terminal j;
($\lambda_i$ (i=1, 2) is a constant and $\lambda_1+\lambda_2$=1, representing different weights of sending and receiving;
calculating a sum of dominance extents of communication terminal i over all communication terminals in the directional network, namely,

$$p_i = \sum p_{i,k} \, .$$

defining a dominance range (r) of communication terminal i:

$$r_i = \eta_1 d_{i,out} + \eta_2 d_{i,in}$$

where $r_i$ represents the dominance range of communication terminal i; $d_{i,out}$ represents the total quantity of short messages sent by communication terminal i; $d_{i,in}$ represents the total quantity of short messages received by communication terminal i; $\eta_i$ (i=1, 2) is a constant and $\eta_1+\eta_2$=1, representing different weights of sending and receiving the short messages;
calculating a dominant coefficient $L_i$ of communication terminal i:

$$L_i = \gamma_1 \frac{p_i}{avg(p)} + \gamma_2 \frac{r_i}{avg(r)}$$

where $avg(p)$ is an average dominance extent of all communication terminals; $avg(r)$ is an average dominance range of all communication terminals; $\gamma_i$ (i=1, 2) is a constant and $\gamma_1+\gamma_2$=1.

**18.** The method of claim 14, wherein the process of calculating the dominant coefficient of the communication terminal corresponding to each node over the communication terminals corresponding to other nodes comprises:

calculating a dominance extent of communication terminal i over communication terminal j :

$$p_{i,j} = \lambda_1 a_{i,j} + \lambda_2 a_{j,i};$$

where $a_{i,j}$ is the quantity of short messages sent by communication terminal i to communication terminal j; $a_{j,i}$ is the quantity of short messages received by communication terminal i from communication terminal j;
$\lambda_1$ (i=1, 2) is a constant and $\lambda_2+\lambda_1=1$, representing different weights of sending and receiving;
calculating a sum of dominance extents of communication terminal i over all communication terminals in the directional network, namely,

$$p_i = \sum p_{i,k}.$$

defining a dominance range (r) of communication i:

$$r_i = \eta_1 d_{i,out} + \eta_2 d_{i,in}$$

where $r_i$ represents the dominance range of communication terminal i; $d_{i,out}$ represents the total quantity of short messages sent by communication terminal i; $d_{i,in}$ represents the total quantity of short messages received by communication terminal i; $\eta_i$ (i=1, 2) is a constant and $\eta_1+\eta_2=1$, representing different weights of sending and receiving the short messages;
calculating a dominant coefficient $L_i$ of communication terminal i:

$$L_i = \gamma_1 \frac{p_i}{avg(p)} + \gamma_2 \frac{r_i}{avg(r)}$$

where $avg(p)$ is an average dominance extent of all communication terminals; $avg(r)$ is an average dominance range of all communication terminals; $\gamma_1$ (i=1, 2) is a constant and $\gamma_2+\gamma_1=1$.

**19.** The method of claim 1, wherein the process of categorizing the first information according to the first category set comprises:

retrieving a feature $W_{d'}$ of a first information text;
calculating a barycenter $Center_{ij}$ and a projection range on each dimension of a training set;
calculating an equivalent radius $R_{ij}^{Equal}$
;calculating a distance between the first information and each category in the first category set:

$$S_i(w_{d'}) = \sqrt{\sum_{j=1}^{k} \frac{(w_{d'j} - Center_{ij})}{(R_{ij}^{Equal})^2} + \sum_{j=k+1}^{m} \frac{w_{d'j}^2}{\beta^2}}$$

where $1/\beta^2$ is a distance coefficient;
determining a specific category in a mapping relation with the first information according to the distance between the first information and each category in the first category set.

**20.** The method of claim 19, comprising: using several categories with smaller distance values as categories in a mapping relation with the first information; or
arranging the calculated distance values in ascending order, and calculating a difference between every two adjacent distances in turn; when the difference changes abruptly, using the categories corresponding to the distances before the abrupt change as the categories in a mapping relation with the first information.

**21.** The method of claim 3 or 5, wherein:

the first information is about a commodity, trade or service; and
depending on different types of the communication terminal, the first information in different forms is pushed to the communication terminal through a Short Message Service Center (SMSC).

**22.** An apparatus for pushing messages, comprising:

a first information processing module, adapted to: categorize a first information according to a first category set, and create a first mapping relation between the first information and a category in the first category set;
a second information processing module, adapted to: obtain a second information sent by a message source, categorize the second information according to a second category set, and create a second mapping relation between the message source that sends the second information and a category in the second category set according to a categorization result;
a message matching module, adapted to: sort out each category in the second category set that matches the corresponding category in the first category set which is in the first mapping relation with the first information according to the relation between the category in the first category set and the category in the second category set, and determine the corresponding message source according to the second mapping relation; and
a message pushing module, adapted to push the first information to the determined corresponding message source.

**22.** The apparatus of claim 21, wherein: the message source is a communication terminal; the first information includes information about a product, trade or service; and the second information represents more than one short message sent by communication terminal.

**23.** The apparatus of claim 22, wherein:

the second information processing module periodically obtains short messages sent by the communication terminal and stores the short messages into a local short message database, and integrates multiple similar short message texts sent by the same communication terminal into one short message text after calculating similarity between the short message texts; and
the second information processing module categorizes the integrated short message text through a one-category categorization algorithm, and incorporates each integrated short message text into a unique category in the second category set; and creates a second mapping relation between an Identifier (ID) of a Mobile Station (MS) that sends the short message and the category in the second category set.

**24.** The apparatus of claim 22 or 33, wherein:

the second information processing module counts the short messages that are mapped to the same category in the second category set and sent by the same communication terminal, sorts the communication terminals according to the quantity of short messages, and generates a user interest measure list;
the message matching module obtains the category in a mapping relation with the first information in the first information processing module, and determines a user interest measure list correlated with the first information; and selects several communication terminals from the determined user interest measure list in order of higher interest to lower interest according to a size of audience of the first information; and
the message pushing module pushes the first information to the selected communication terminals.

**25.** The apparatus of claim 24, wherein: the message matching module further determines the interest of each communication terminal toward the first information according to the quantity of short messages corresponding to each communication terminal ID in the user interest measure list correlated with the first information and according to the similarity between the first information and the category in a mapping relation with the first information; generates a user interest measure list specific to the first information; and selects several communication terminals from the determined user interest measure list in order of higher interest to lower interest according to the size of audience of the first information.

**26.** The apparatus of claim 25, wherein:

the second information processing module further creates a directional network according to the short messages stored in the local short message database by using the communication terminal ID as a network node, using short message receiving and sending between communication terminals as a directional arc, and using the quantity of exchanged short messages as an arc weight;

the second information processing module calculates a dominant coefficient of the communication terminal corresponding to each node over the communication terminals corresponding to other nodes according to the directional network;

the second information processing module arranges the communication terminal IDs according to the dominant coefficient, and generates a dominant user list;

the information matching module selects several communication terminals on a basis of the dominant user list and interest measure list according to the size of audience of the first information; and

the message pushing module pushes the first information to the selected communication terminals.

Start

S11

Collecting the short messages
sent by the user and storing
them into the short message
database

S12

Preprocessing and integrating
the short message data of the
user

S13

Categorizing the integrated
short message text

S14

Creating a user interest
measure list

S15

Creating a community network
according to the short
message database

S16

Determining a dominant user
list according to the community
network

End

Figure 1A

Start

→ S21

Entering an advertisement and categorizing it

→ S22

Determining the potential audience ← User interest measure list

→ S23

Determining the final audience ← Dominant user list

→ S24

Generating and sending an advertisement

End

Figure 1B

Start

S30
Setting a group transmitting threshold k, a sliding window size w, and a similarity threshold d

S31
Sorting the short message database by using the sender number as a primary keyword and using the recipient number as a secondary keyword

S32
Deleting all the records whose sending count exceeds k in the database

S33
Any unprocessed short message?

Yes

S34
Reading the next short message

S35
Retrieving its eigenvector

S36
Calculating the similarity to w previous short messages

S37
Similarity > d

Yes                No

S38
integrating with the text of the highest similarity

S39
Using the short message as a new text in the sliding window, and sliding one pane back in the sliding window

No

End

Figure 2

| Category 1 | Quantity of short messages |
|---|---|
| MS ID of user 1 | 8 |
| MS ID of user 2 | 2 |
| MS ID of user 1 | 12 |
| ...... | |

| Category 2 | Quantity of short messages |
|---|---|
| MS ID of user 1 | 4 |
| MS ID of user 2 | 2 |
| MS ID of user 3 | 1 |
| ...... | |

| Category m | Quantity of short messages |
|---|---|
| MS ID of user 1 | 6 |
| MS ID of user 3 | 1 |
| MS ID of user 4 | 1 |
| ...... | |

Figure 3

| Category 1 | Quantity of short messages |
|---|---|
| MS ID of user 1 | 20 |
| MS ID of user 2 | 2 |
| ...... | |

| Category 2 | Quantity of short messages |
|---|---|
| MS ID of user 1 | 4 |
| MS ID of user 2 | 2 |
| MS ID of user 3 | 1 |
| ...... | |

| Category m | Quantity of short messages |
|---|---|
| MS ID of user 1 | 6 |
| MS ID of user 3 | 1 |
| MS ID of user 4 | 1 |
| ...... | |

Figure 4

| Sender ID | Recipient ID |
|---|---|
| ID1 | ID2 |
| ID1 | ID2 |
| ID1 | ID5 |
| ID2 | ID1 |
| ID3 | ID1 |
| ID3 | ID4 |
| ID3 | ID5 |
| ID3 | ID5 |
| ID3 | ID5 |
| ID5 | ID3 |
| ID5 | ID4 |

(1) Short message database

(2) Community network

Figure 5

```
                    ┌─────────────────────┐
                    │        Start        │
                    └─────────────────────┘
                              │
                              │                    S40
                              ▼
                    ┌─────────────────────┐
                    │ Reading an advertisement │
                    └─────────────────────┘
                              │
                              │                    S41
                              ▼
        No          ╱─────────────────────╲         Yes
    ┌───────────────      Is the           ───────────────┐
    │           ╲ advertisement categorized ╱              │
    │            ╲    automatically?       ╱                │
    │             ╲─────────────────────╱                  │                S43
    │                                                       ▼
    │                                      ┌─────────────────────────┐
    │                                      │ Retrieving the advertisement │
    │                                      │    eigenvector Wd '     │
    │                                      └─────────────────────────┘
    │                                                 │                    S44
    │                                                 ▼
    │                                      ┌─────────────────────────┐
    │                                      │ Projecting, and obtaining the │
    │                                      │ barycenter Center_ij of dimension j │
    │                                      │ of category i and the projection │
    │                                      │      range Range_ij     │
    │                                      └─────────────────────────┘
    │                                                 │                    S45
    │          S42                                    ▼
    ┌──────────────┐                       ┌─────────────────────────┐
    │   Entering   │                       │ Calculating equivalent radius R_ij │
    │ an advertisement │                   └─────────────────────────┘
    │   category   │                                 │                    S46
    └──────────────┘                                 ▼
    │                                      ┌─────────────────────────┐
    │                                      │ Calculating distance between Wd │
    │                                      │    ' and each category  │
    │                                      └─────────────────────────┘
    │                                                 │                    S47
    │                                                 ▼
    │                                      ┌─────────────────────────┐
    │                                      │ Selecting k categories with the │
    │                                      │ shortest distance as advertisement │
    │                                      │        categories       │
    │                                      └─────────────────────────┘
    │                                                 │
    │                                                 │
    └─────────────────────┬───────────────────────────┘
                          ▼
                ┌─────────────────────┐
                │         End         │
                └─────────────────────┘
```

Figure 6

10

101

102

First message processing module

Second message processing module

103

Message matching module

104

Message pushing module

Figure 7

EP 2 094 023 A1

# INTERNATIONAL SEARCH REPORT

International application No.

PCT/CN2008/070483

**A. CLASSIFICATION OF SUBJECT MATTER**

H04Q 7/22(2006.01) i

According to International Patent Classification (IPC) or to both national classification and IPC

**B. FIELDS SEARCHED**

Minimum documentation searched (classification system followed by classification symbols)

IPC: H04Q; H04L; G06F

Documentation searched other than minimum documentation to the extent that such documents are included in the fields searched

Electronic data base consulted during the international search (name of data base and, where practicable, search terms used)

CNKI, CNPAT, WPI, EPODOC, PAJ: push, class+, map+, match, correspond+, information, advertise, message

**C. DOCUMENTS CONSIDERED TO BE RELEVANT**

| Category* | Citation of document, with indication, where appropriate, of the relevant passages | Relevant to claim No. |
|---|---|---|
| A | CN 1529966 A (NOKIA CORP) 15 Sep.2004(15.09.2004) the whole document | 1-26 |
| A | CN 1787655 A (EVOLIUM SAS) 14 Jun.2006(14.06.2006) the whole document | 1-26 |
| A | CN 1845550 A (ZTE CORP) 11 Oct.2006(11.10.2006) the whole document | 1-26 |
| A | CN 1870601 A (SHUNDA COMPUTER FACTORY CO LTD SHUNDE et al) 29 Nov.2006(29.11.2006) the whole document | 1-26 |
| P,X | CN 101026802 A (HUAWEI TECHNOLOGIES CO LTD) 29 Aug.2007(29.08.2007) claims 1-26 | 1-26 |
| P,X | CN 101047723 A (TENCENT TECHNOLOGY SHENZHEN CO LTD) 03 Oct.2007(03.10.2007) description page 2 line 3-page 5 line 15, figures 1-3 | 1-26 |

☒ Further documents are listed in the continuation of Box C.          ☒ See patent family annex.

| | |
|---|---|
| *    Special categories of cited documents: | "T"  later document published after the international filing date or priority date and not in conflict with the application but cited to understand the principle or theory underlying the invention |
| "A"  document defining the general state of the art which is not considered to be of particular relevance | |
| "E"  earlier application or patent but published on or after the international filing date | "X"  document of particular relevance; the claimed invention cannot be considered novel or cannot be considered to involve an inventive step when the document is taken alone |
| "L"  document which may throw doubts on priority claim (S) or which is cited to establish the publication date of another citation or other special reason (as specified) | "Y"  document of particular relevance; the claimed invention cannot be considered to involve an inventive step when the document is combined with one or more other such documents, such combination being obvious to a person skilled in the art |
| "O"  document referring to an oral disclosure, use, exhibition or other means | |
| "P"  document published prior to the international filing date but later than the priority date claimed | "&"document member of the same patent family |

| Date of the actual completion of the international search | Date of mailing of the international search report |
|---|---|
| 11 Jun.2008(11.06.2008) | **26 Jun. 2008 (26.06.2008)** |

| Name and mailing address of the ISA/CN The State Intellectual Property Office, the P.R.China 6 Xitucheng Rd., Jimen Bridge, Haidian District, Beijing, China 100088 Facsimile No. 86-10-62019451 | Authorized officer LIU,Li Telephone No. (86-10)62411687 |
|---|---|

Form PCT/ISA/210 (second sheet) (April 2007)

## INTERNATIONAL SEARCH REPORT

International application No.

PCT/CN2008/070483

C (Continuation).    DOCUMENTS CONSIDERED TO BE RELEVANT

| Category* | Citation of document, with indication, where appropriate, of the relevant passages | Relevant to claim No. |
|---|---|---|
| P,X | CN 101075253 A (TENCENT TECHNOLOGY SHENZHEN CO LTD) 21 Nov.2007(21.11.2007) description page 2 line 17-page 11 line 25, figures 1-5 | 1-26 |

Form PCT/ISA/210 (continuation of second sheet ) (April 2007)

28

## INTERNATIONAL SEARCH REPORT
### Information on patent family members

| | International application No. |
| --- | --- |
| | PCT/CN2008/070483 |

| Patent Documents referred in the Report | Publication Date | Patent Family | Publication Date |
| --- | --- | --- | --- |
| CN 1529966 A | 15.09.2004 | WO 02069585 A2 | 06.09.2002 |
| | | US 2002160805 A1 | 31.10.2002 |
| | | EP 1364497 A2 | 26.11.2003 |
| | | US 2004219882 A1 | 04.11.2004 |
| | | US 2004237109 A1 | 25.11.2004 |
| | | US 6778834 B2 | 17.08.2004 |
| | | US 7295862 B2 | 13.11.2007 |
| | | US 7308269 B2 | 11.12.2007 |
| | | CN 100336371 C | 05.09.2007 |
| CN 1787655 A | 14.06.2006 | EP 1670265 A1 | 14.06.2006 |
| | | US 2006128401 A1 | 15.06.2006 |
| | | JP 2006163996 A | 22.06.2006 |
| CN 1845550 A | 11.10.2006 | NONE | |
| CN 1870601 A | 29.11.2006 | NONE | |
| CN 101026802 A | 29.08.2007 | NONE | |
| CN 101047723 A | 03.10.2007 | NONE | |
| CN 101075253 A | 21.11.2007 | NONE | |

Form PCT/ISA/210 (patent family annex) (April 2007)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **Sebastiani F.** Machine learning in automated text categorization. *ACM Computing Surveys,* 2002, vol. 34 (1), 1-47